# EUROPEAN PATENT APPLICATION

(11) **EP 2 337 256 A1**
(43) Date of publication of application: **22.06.2011**
(21) Application number: 09290952.2
(22) Date of filing: 16.12.2009
(51) Int. Cl.: H04J 14/02

(54) **Communications between optical network units of a passive optical network**

(71) Applicant: Alcatel Lucent, 75008 Paris (FR)
(72) Inventor: Krimmel, Heinz-Georg, 70825 Korntal-Münchingen (DE)
(74) Representative: Kohler Schmid Möbus

(57) **Abstract**

The invention relates to a method for performing communications between a plurality of optical network units (6.1 to 6.N) arranged in a plurality of branches (5.1 to 5.N) of a passive optical network (1), the method comprising: transmitting an upstream signal (US) comprising data packets (DP) from at least one optical network unit (6.1 to 6.N) to a central station (3) at a main line (2) of the passive optical network (1), and replicating the data packets (DP) for direct re-transmission to the plurality of optical network units (6.1 to 6.N) in a downstream signal (DS2). A central station (3), an optical network unit (6.1), a passive optical network (1), and a wireless network (10) are also provided.

## Description

### Field of the Invention

The invention relates to the field of telecommunications, and, more specifically, to passive optical networks, in particular for use as backhauling networks of wireless transmission systems.

### Background

This section introduces aspects that may be helpful in facilitating a better understanding of the invention. Accordingly, the statements of this section are to be read in this light and are not to be understood as admissions about what is in the prior art or what is not in the prior art.

Passive optical networks (PONs) are tree-like networks having a central station, also referred to as Optical Line Termination, OLT, arranged in a main line of the PON, the central station being connected via optical cabling to a plurality of optical network units (ONUs) arranged in a plurality of branches branching off from the main line. Usually, the communication in a PON is performed between the OLT and the ONUs using Media Access Control (MAC).

Existing PONs e.g. of the Gigabit (GPON) type are typically not supporting direct ONU-to-ONU communications, as existing GPON access solutions are strictly communicating through the OLT performing a switching on the packet layer, thereby intentionally blocking direct ONU-to-ONU communications. The mandatory switched communication path involves avoidable delays which may reduce the usefulness of cost-effective PON-structured networks as backhaul networks for interconnecting base stations, in particular when network MIMO applications are to be realized, using non-local (distributed) antennas located at different cells / base stations. Typically, (possibly non-decoded) data received by the distributed antennas is provided to one of the antenna sites for a final decision, the antenna site performing the decision being generally selected in a dynamic way. Therefore, such applications require the exchange of time-critical data between the base stations with minimum delay. It should be noted that for the sake of simplicity, network MIMO may also be referred to shortly as "MIMO" in the following.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for performing communications between a plurality of optical network units arranged in a plurality of branches of a passive optical network, the method comprising: transmitting an upstream signal comprising data packets from at least one optical network unit to a central station at a main line of the passive optical network, and replicating the data packets for direct re-transmission to the plurality of optical network units in a downstream signal in the same PON or in another PON.

The basic idea of the method proposed herein is to exploit the broadcast nature of the PON to make data packets transmitted from one or more optical network units in an upstream signal available to the other optical network units by directly re-transmitting (broadcasting) the data packets in the downstream direction. In such a way, an immediate re-distribution of the upstream (ONU originating) data can be provided without going through the OLT packet switch and queue, i.e., no routing of the data packets is required, as the replication is performed on the physical layer (layer 1).

In this way, the direct re-transmission may be performed with a delay time of the order of several nanoseconds, thus allowing an optical network unit to receive data packets from the other optical network units with a time delay which is sufficient for using the data contained in the packets e.g. for network MIMO transmissions of base stations being associated with the optical network units.

In one variant, the method further comprises: filtering the re-transmitted data packets in the optical network units (ONUs) for dropping re-transmitted data packets which do not require further processing. Thus, a switching process using a distributed broadcast-and-select principle may be implemented. The data packets may be further processed by sending them (e.g. via optical or electrical cabling) to a base station associated with the optical network unit, the base station using the data e.g. for performing MIMO transmissions in a way known in the art and therefore not being detailed herein. It will be understood that typically, an optical network unit may identify and drop those re-transmitted data packets which originate from the optical network unit itself, as the data contained therein is already available in that ONU or in the associated base station, respectively.

In another variant, the re-transmitted data packets are used for performing MIMO transmissions between a plurality of base stations associated with the optical network units. Two or more of the base stations associated with the ONUs may form a cooperating cluster which is adapted for performing network MIMO e.g. by using a plurality of antennas associated with the base stations as beamforming antennas. It will be understood that data packets of ONUs which are associated with base stations which (temporally) do not participate in the MIMO transmissions may also be dropped in the packet filter.

In one variant, the upstream signal and the downstream signal are transmitted over different wavelengths. Typically, optical multiplexing is performed in this case for transmitting the upstream signal and the downstream signal over the same fiber. In addition, a further downstream signal may be transmitted from the central station to the optical network units using a wavelength which is different from the wavelengths of the upstream signal and the downstream signal, respectively. In a PON allowing transmissions over three different wavelengths (e.g. a PON according to the GPON standard), one downstream channel and the upstream channel may be used for regular transmissions using Time Division Multiple Access Media Access Control (MAC), requiring transmission of scheduling data in addition to payload data. The further downstream channel, however, may be a wavelength channel originally intended for cable TV (CATV) broadcasting, which does not require scheduling information. As for such a broadcasting channel, no scheduling information has to be provided by the MAC of the PON, such a channel is ideally suited for the purpose of re-transmitting the data packets to all optical network units with minimum delay.

In case that only a single downstream channel is used, or when data packets of further MIMO clusters are to be re-transmitted, it is particularly advantageous when the downstream data / bit rate of the downstream channel is chosen to be higher than the upstream data, respectively, bit rate of the upstream channel. In particular, the downstream data rate may be an integer multiple of the upstream data rate. By using a higher downstream data rate, the re-transmitted data packets may be transmitted together with scheduling data and payload data over one and the same downstream wavelength channel, still allowing the base stations to perform MIMO transmissions. Alternatively, the higher downstream data rate may be used for transmitting further data packets of optical network units of a further PON (associated e.g. with base stations of a further MIMO cluster), e.g. by (time-)multiplexing the re-transmitted data packets with the further data packets, still ensuring that the downstream transmissions are sufficiently fast to allow MIMO transmissions.

In one variant, the step of replicating the data packets comprises regenerating the upstream signal. Typically, physical reconstruction of the bits contained in the upstream signal will be performed using 3R reconstruction (re-shaping, re-amplification, re-timing). The regenerated (digital) signal thus obtained may be directly provided to an optical transmitter for downstream transmission. Alternatively, before performing the re-transmission, the regenerated upstream signal may be combined, in particular (time-)multiplexed, with at least one further signal, e.g. containing data packets originating from ONUs associated with base stations of a neighboring cluster. Alternatively or in addition, in particular when using only a single downstream channel, the regenerated upstream signal may be combined with a signal containing scheduling data of a Media Access Control (MAC) unit of the PON.

A second aspect is realized in a central station for a passive optical network, comprising: an optical receiver, in particular a burst-mode receiver, adapted for receiving an upstream signal comprising data packets from a plurality of optical network units, and an optical transmitter adapted for transmitting a downstream signal to the optical network units, wherein the central station is adapted for replicating the data packets contained in the upstream signal for direct re-transmission in the downstream signal. The central station is adapted for performing a bit replication on the physical layer without using a packet switch, such that only a small buffer (if any) is required and the delay for the re-transmission will be very small, typically of the order of several nanoseconds.

In one embodiment, the central station further comprises a further optical transmitter adapted for transmitting a further downstream signal to the plurality of optical network units. As described above, the further downstream signal may be used for transmitting payload data together with scheduling data. As the scheduling data for the ONUs is contained in the further downstream signal, no scheduling data needs to be transmitted in the downstream signal for the re-transmission of the data packets, such that the whole downstream data rate is available for broadcasting of the data packets.

In one embodiment, the central station further comprises a regeneration unit for regeneration of the upstream signal, typically by performing a 3R regeneration. In some embodiments, a combining unit, in particular a multiplexer, may be arranged in the central station for combining the regenerated local upstream signal with a further signal, containing e.g. data packets from further PONs, and/or MAC scheduling data.

In another embodiment, the optical transmitter, the optical receiver, and possibly the further optical transmitter are adapted to operate at different wavelengths, allowing to perform the upstream and downstream transmissions over the same fiber.

A further aspect relates to an optical network unit for a passive optical network, comprising: an optical transmitter for transmitting an upstream signal containing data packets, an optical receiver, in particular a burst-mode receiver, for receiving a downstream signal containing re-transmitted data packets of the optical network unit and of at least one further optical network unit, and a packet filter for dropping those re-transmitted data packets which do not require further processing. The ONU as described herein implements the selection part of a broadcast-and-select principle used in the communication between different ONUs of the PON.

Another aspect relates to a passive optical network, comprising: a main line with a central station as described above, and at least one optical network unit as described above, being arranged in a branch of the passive optical network. The PON as described herein uses a distributed broadcast-and-select principle for communication between the ONUs, thus allowing the rapid transfer of time-critical data. Such a PON may be implemented with only small modifications to a given network topology / given building blocks of a standardized optical access network equipment.

A final aspect of the invention is implemented in a wireless network, comprising: a plurality of base stations for performing wireless communications, and a passive optical network as described above, wherein each base station is operatively connected to an optical network unit of the passive optical network, the base stations being further adapted to perform MIMO transmissions using the passive optical network as a backhaul network.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: a schematic diagram of an embodiment of a PON being used as a backhaul network of a wireless network, and
- **Fig. 2**: a schematic diagram of a multiplexed version of the PON of Fig. 1.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

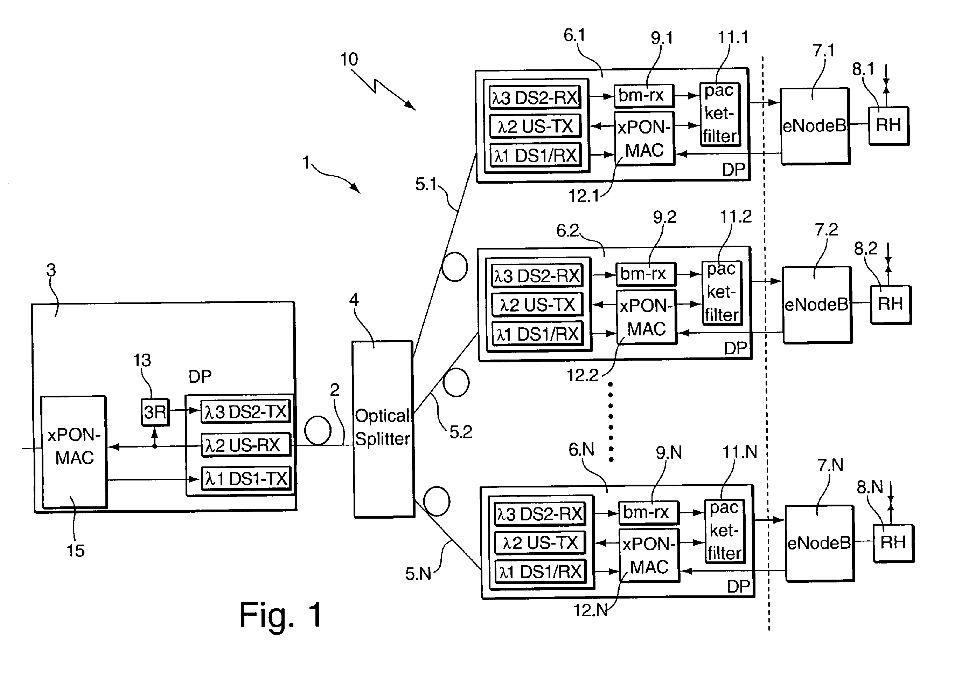

**Fig. 1** shows a passive optical network **1** having a main fiber line **2** being arranged between a central station **3,** also referred to as an Optical Line Termination (OLT), and an 1 x N passive (directional) optical distribution network (splitter) **4** connecting the main line 2 with a number N of branches, three of which (**5.1, 5.2, 5.N**) are shown in Fig. 1. Each of the branches 5.1 to 5.N terminates in an Optical Network Unit (ONU) **6.1** to **6.N.**

The PON 1 is used as a backhaul network for a plurality of base stations **7.1** to **7.N,** being devised, in the present example, as enhanced NodeBs (of the Long Term Evolution, LTE, standard). Each of the base stations 7.1 to 7.N is connected to a respective one of the ONUs 6.1 to 6.N via cabling. Each base station 7.1 to 7.N is connected to a remote radio head **8.1** to **8.N** having one or more transmit antennas. The base stations 7.1 to 7.N are adapted for performing (network) MIMO in a way which is known in the art and will therefore not be detailed herein. However, for allowing the base stations 7.1 to 7.N to perform the MIMO transmissions, a rapid data exchange between the base stations 7.1 to 7.N has to be performed over the PON 1.

The PON 1 of Fig. 1 is implemented in compliance with the GPON standard and uses two downstream channels **DS1, DS2** at a first and third wavelength λ₁. λ₃ and one upstream channel **US** at a second wavelength λ₂. In the following, same reference numerals will be used for the channels DS1, DS2, US and downstream / upstream signals DS1, DS2, US transmitted over these channels. For implementing the first / second downstream channel DS1, DS2, a first / second (optical) transmitter **DS1-TX** / **DS2-TX** is provided in the central station 3 and a corresponding first / second optical receiver **DS1-RX** / **DS2-RX** is provided in each of the ONUs 6.1 to 6.N. For implementing the upstream channel US, an upstream transmitter **US-TX** is arranged in each of the ONUs 6.1 to 6.N, and a corresponding upstream receiver **US-RX** is arranged in the central station 3.

In the PON 1 of Fig. 1, a MAC unit **15** is provided in the central station 3, the MAC unit 15 transferring payload data together with scheduling data to the first downstream transmitter DS1-TX. The scheduling data comprises (among others) upstream grants for time slots in which the ONUs 6.1 to 6.N may transmit their data (packets / frames) over the upstream channel, thus allowing to coordinate the upstream transmissions of the ONUs 6.1 to 6.N. At least part of the data transmitted in upstream is typically backhauling data which is not intended for performing direct ONU-to-ONU transmissions. The entire upstream data from the upstream receiver US-RX typically passes through the MAC unit 15 of the PON 1, serving as an output which is provided to further processing entities (not shown).

The scheduling data and the payload data are provided in downstream to a corresponding MAC unit **12.1** to **12.N** arranged in the ONUs 6.1 to 6.N. The MAC unit 12.1 to 12.N receives upstream data packets **DP** from the base stations 7.1 to 7.N and uses the scheduling data for providing the data packets DP to the upstream transmitter US-TX in the scheduled time intervals. In contrast thereto, the second downstream channel DS2 (in the present example at a wavelength λ₃ of 1550 nm) is in a GPON originally intended for broadcasting cable TV, i.e. for transmitting payload data only, such that no additional scheduling data from the MAC unit 15 is required for this channel.

As a rapid data transfer between the base stations 7.1 to 7.N requires a rapid data exchange between the associated ONUs 6.1 to 6.N of the PON 1, a distributed broadcast-and-select mechanism is applied in the PON 1 which will be detailed further below.

First, the upstream signal US containing the data packets DP received in the upstream receiver US-RX of the central station 3 is provided to a 3R regeneration unit **13** which allows to regenerate the bits of the data packets contained in the upstream signal (physical layer regeneration). The bits of the regenerated / replicated data packets are then directly provided to the second downstream transmitter DS2-TX for immediate re-transmission. In this way, the central station 3 acts as a mirror for distributing / broadcasting the data packets DP back to the ONUs 6.1 to 6.N.

The second downstream receiver DS2-RX of the ONUs 6.1 to 6.N receives the re-transmitted data packets DP, performs o/e-conversion, and forwards them to a burst-mode receiving section **9.1** to **9.N.** The burst-mode receiving section 9.1 to 9.N may be required for receiving the second downstream signal DS2 in case that the data packets are not transmitted continuously, i.e. that pauses do occur between the data packets of the different ONUs 6.1 to 6.N. However, depending on the type of regeneration and framing, a continuous-wave (cw)-mode receiver may be sufficient, in case that upstream pauses are treated accordingly.

From the burst-mode receiving section 9.1 to 9.N, the re-transmitted data packets DP are provided to a packet filter **11.1** to **11.N.** The packet filter 11.1 to 11.N is adapted to filter the re-transmitted data packets DP for providing only those data packets to the base stations 7.1 to 7.N which are needed locally e.g. for the MIMO transmissions. For instance, in each of the ONUs 6.1 to 6.N, only data packets DP which originate from the other ONUs 6.1 to 6.N may be provided to the base stations 7.1 to 7.N. In addition, as shown in Fig. 1, the packet filter 11.1 to 11.N may also be used for filtering data packets DP transmitted over the first downstream channel DS1.

In the PON 1 of Fig. 1, the second downstream channel DS2 is ideally suited for re-transmitting the data packets DP, as no scheduling data has to be transmitted over that channel.

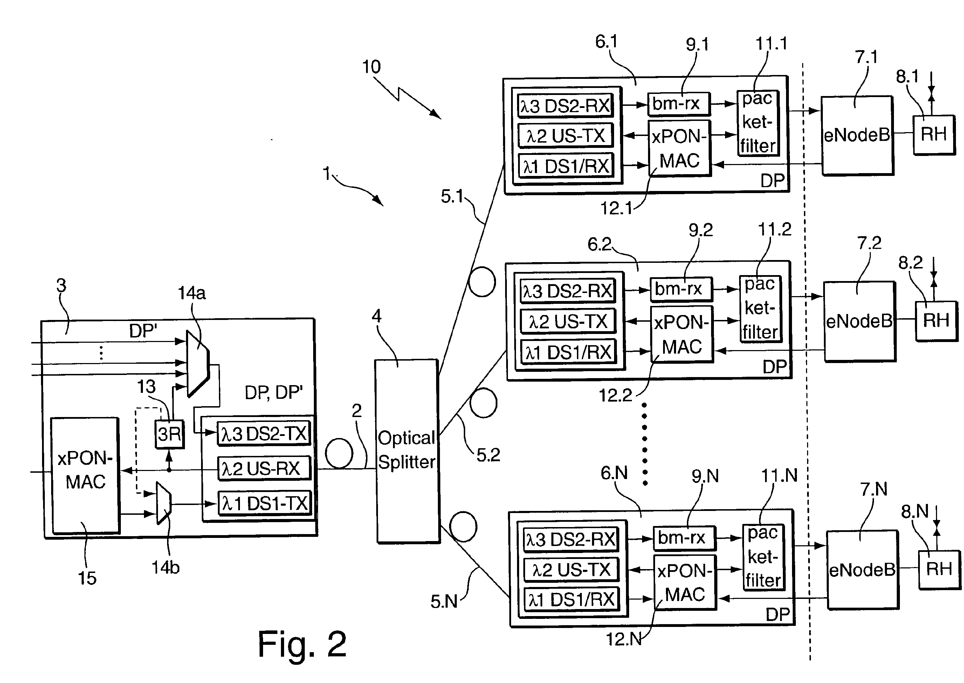

This property is advantageously used in the PON 1 shown in **Fig. 2** for combining the data packets DP contained in the upstream signal US from the ONUs 6.1 to 6.N of the PON 1 with further data packets **DP'** of further ONUs (resp., which associated further base stations) of a further PON (not shown), serving as a backhauling network of a neighbouring cluster of base stations. The further data packets DP' are time-multiplexed with the data packets DP of the PON 1 in a multiplexer **14a** on a bit-to-bit / byte-to-byte basis every second bit / byte containing the data packets DP of the PON 1. It will be understood that alternatively, packet-wise multiplexing (on a frame-to-frame basis) may be performed, or the data packets DP and the further data packets DP' may be multiplexed using (O)FDM.

It will be understood that a de-multiplexer (not shown) may be provided in the ONUs 6.1 to 6.N for retrieving the data packets DP and the further data packets DP' from the multiplexed downstream signal DS2. One skilled in the art will readily appreciate that data packets of more than one further cluster / PON may be multiplexed with the data packets DP of the PON 1, typically requiring a second downstream channel DS2 / transmitter DS2-TX, and receiver DS2-RX with an even higher bit rate, the bit rate increasing with an increasing number of multiplexed data streams, the downstream data rate being possibly 10 to 20 times of the upstream data rate.

An alternative way of re-transmitting the data packets DP is also represented in Fig. 2. In this case, the regenerated upstream signal US is provided to a multiplexer **14b** for time-multiplexing the bits of the data packets DP with scheduling information and payload data not intended for inter-ONU-communications, being provided by the MAC unit 15. Thus, only one downstream channel DS1 is needed, i.e. the second downstream channel DS2 may be dispensed with. In this case, the downstream data rate is higher than the upstream data rate in order to allow the inclusion of many upstream data packet streams in the sense of broadcast and select. It will be appreciated that also in this case, a small buffer may be needed for buffering some bits of the data packets DP before performing the multiplexing with the scheduling data.

In summary, in the way described above, a PON, resp., a wireless network with a PON as a backhaul network, may be provided which allow to perform ONU-to-ONU communications with short delay times. A pre-requisite for this is the broadcast-and-select principle as described herein, allowing to dispense with (by-pass) centralized electronic switching. In this way, all the distributed information may be made available in the whole cluster in a multipoint-to-multipoint arrangement, possibly also making second party cluster information available inside the cluster without the need to involve packet switches.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for performing communications between a plurality of optical network units (6.1 to 6.N) arranged in a plurality of branches (5.1 to 5.N) of a passive optical network (1), the method comprising:
transmitting an upstream signal (US) comprising data packets (DP) from at least one optical network unit (6.1 to 6.N) to a central station (3) at a main line (2) of the passive optical network (1), and
replicating the data packets (DP) for direct re-transmission to the plurality of optical network units (6.1 to 6.N) in a downstream signal (DS2; DS1).

2. Method according to claim 1, further comprising: filtering the re-transmitted data packets (DP) in the optical network units (6.1 to 6.N) for dropping re-transmitted data packets (DP) which do not require further processing.

3. Method according to claim 1 or 2, further comprising: using the re-transmitted data packets (DP) for performing MIMO transmissions between a plurality of base stations (7.1 to 7.N) associated with the optical network units (6.1 to 6.N).

4. Method according to any one of the preceding claims, wherein the upstream signal (US) and the downstream signal (DS2; DS1) are transmitted over different wavelengths (λ₂, λ₃; λ₂, λ₁).

5. Method according to any one of the preceding claims, further comprising:
transmitting a further downstream signal (DS1) from the central station (3) to the optical network units (6.1 to 6.N) using a wavelength (λ₁) which is different from the wavelengths (λ₂, λ₃) of the upstream signal (US) and of the downstream signal (DS2), respectively.

6. Method according to any one of the preceding claims, wherein a downstream data rate of the downstream signal (DS2; DS1) is chosen to be higher than an upstream data rate of the upstream signal (US), the downstream data rate being preferably an integer multiple of the upstream data rate.

7. Method according to any one of the preceding claims, wherein the step of replicating the data packets (DP) comprises regenerating the upstream signal (US).

8. Method according to claim 6, further comprising: before performing the re-transmission, combining, in particular multiplexing, the regenerated upstream signal (US) with at least one further signal preferably comprising further data packets (DP') and/or scheduling data.

9. Central station (3) for a passive optical network (1), comprising:
an optical receiver (US-RX), in particular a burst-mode receiver, adapted for receiving an upstream signal (US) comprising data packets (DP) from a plurality of optical network units (6.1 to 6.N), and
an optical transmitter (DS2-TX; DS1-TX) adapted for transmitting a downstream signal (DS2; DS1) to the optical network units (6.1 to 6.N), wherein the central station (3) is adapted for replicating the data packets (DP) contained in the upstream signal (US) for direct re-transmission in the downstream signal (DS2; DS1).

10. Central station according to claim 9, further comprising: a further optical transmitter (DS1-TX) adapted for transmitting a further downstream signal (DS1) to the plurality of optical network units (6.1 to 6.N).

11. Central station according to claim 9 or 10, further comprising: a regeneration unit (13) for regeneration of the upstream signal (US), preferably further comprising a combining unit, in particular a multiplexer (14a, 14b), for combining the regenerated upstream signal (US) with at least one further signal.

12. Central station according to any one of claims 9 to 11, wherein the optical transmitter (DS2-TX; DS1-TX) and the optical receiver (US-RX) are adapted to operate at different wavelengths (λ₂, λ₃; λ₂, λ₁).

13. Optical network unit (6.1) for a passive optical network (1), comprising:
an optical transmitter (US-TX) for transmitting an upstream signal (US) containing data packets (DP),
an optical receiver (DS2-RX; DS1-RX), in particular a burst-mode receiver, for receiving a downstream signal (DS) containing re-transmitted data packets (DP) of the optical network unit (6.1) and of at least one further optical network unit (6.2 to 6.N), and
a packet filter (11.1) adapted for dropping those re-transmitted data packets (DP) which do not require further processing.

14. Passive optical network (1), comprising:
a main line (2) with a central station (3) according to any one of claims 9 to 12, and
at least one optical network unit (6.1 to 6.N) according to claim 13, being arranged in a branch (5.1 to 5.N) of the passive optical network (1).

15. Wireless network (10), comprising:
a plurality of base stations (7.1 to 7.N) for performing wireless communications, and
a passive optical network (1) according to claim 14, wherein each base station (7.1 to 7.N) is operatively connected to an optical network unit (6.1 to 6.N) of the passive optical network (1), the base stations (7.1 to 7.N) being further adapted to perform MIMO transmissions using the passive optical network (1) as a backhaul network.

## Amended claims

### Amended claims in accordance with Rule 137(2) EPC.

**1.** Method for performing communications between a plurality of optical network units (6.1 to 6.N) arranged in a plurality of branches (5.1 to 5.N) of a passive optical network (1), the method comprising:
transmitting an upstream signal (US) comprising data packets (DP) from at least one optical network unit (6.1 to 6.N) to a central station (3) at a main line (2) of the passive optical network (1),
**characterized by**
replicating the data packets (DP) on the physical layer without routing of the data packets (DP) for direct re-transmission to the plurality of optical network units (6.1 to 6.N) in a downstream signal (DS2; DS1).

**2.** Method according to claim 1, further comprising: filtering the re-transmitted data packets (DP) in the optical network units (6.1 to 6.N) for dropping re-transmitted data packets (DP) which do not require further processing.

**3.** Method according to claim 1 or 2, further comprising: using the re-transmitted data packets (DP) for performing MIMO transmissions between a plurality of base stations (7.1 to 7.N) associated with the optical network units (6.1 to 6.N).

**4.** Method according to any one of the preceding claims, wherein the upstream signal (US) and the downstream signal (DS2; DS1) are transmitted over different wavelengths (λ₂, λ₃; λ₂, λ₁).

**5.** Method according to any one of the preceding claims, further comprising:
transmitting a further downstream signal (DS1) from the central station (3) to the optical network units (6.1 to 6.N) using a wavelength (λ₁) which is different from the wavelengths (λ₂, λ₃) of the upstream signal (US) and of the downstream signal (DS2), respectively.

**6.** Method according to any one of the preceding claims, wherein a downstream data rate of the downstream signal (DS2; DS1) is chosen to be higher than an upstream data rate of the upstream signal (US), the downstream data rate being preferably an integer multiple of the upstream data rate.

**7.** Method according to any one of the preceding claims, wherein the step of replicating the data packets (DP) comprises regenerating the upstream signal (US).

**8.** Method according to claim 6, further comprising: before performing the re-transmission, combining, in particular multiplexing, the regenerated upstream signal (US) with at least one further signal preferably comprising further data packets (DP') and/or scheduling data.

**9.** Central station (3) for a passive optical network (1), comprising:
an optical receiver (US-RX), in particular a burst-mode receiver, adapted for receiving an upstream signal (US) comprising data packets (DP) from a plurality of optical network units (6.1 to 6.N), and
an optical transmitter (DS2-TX; DS1-TX) adapted for transmitting a downstream signal (DS2; DS1) to the optical network units (6.1 to 6.N),
**characterized in that**
the central station (3) is adapted for replicating the data packets (DP) contained in the upstream signal (US) on the physical layer without routing of the data packets (DP) for direct re-transmission in the downstream signal (DS2; DS1).

**10.** Central station according to claim 9, further comprising: a further optical transmitter (DS1-TX) adapted for transmitting a further downstream signal (DS1) to the plurality of optical network units (6.1 to 6.N).

**11.** Central station according to claim 9 or 10, further comprising: a regeneration unit (13) for regeneration of the upstream signal (US), preferably further comprising a combining unit, in particular a multiplexer (14a, 14b), for combining the regenerated upstream signal (US) with at least one further signal.

**12.** Central station according to any one of claims 9 to 11, wherein the optical transmitter (DS2-TX; DS1-TX) and the optical receiver (US-RX) are adapted to operate at different wavelengths (λ₂, λ₃; λ₂, λ₁).

**13.** Passive optical network (1), comprising:
a main line (2) with a central station (3) according to any one of claims 9 to 12, and
at least one optical network unit (6.1 to 6.N), being arranged in a branch (5.1 to 5.N) of the passive optical network (1).

**14.** Wireless network (10), comprising:
a plurality of base stations (7.1 to 7.N) for performing wireless communications, and
a passive optical network (1) according to claim 13, wherein each base station (7.1 to 7.N) is operatively connected to an optical network unit (6.1 to 6.N) of the passive optical network (1), the base stations (7.1 to 7.N) being further adapted to perform MIMO transmissions using the passive optical network (1) as a backhaul network.
